(19) Europäisches Patentamt
European Patent Office
Office européen des brevets

(11) **EP 4 752 807 A1**

(12) **EUROPEAN PATENT APPLICATION**
published in accordance with Art. 153(4) EPC

(43) Date of publication:
**03.06.2026 Bulletin 2026/23**

(21) Application number: **23946181.7**

(22) Date of filing: **25.07.2023**

(51) International Patent Classification (IPC):
***G06Q 20/06*** (2012.01)

(52) Cooperative Patent Classification (CPC):
**G06Q 20/06**

(86) International application number:
**PCT/CN2023/109166**

(87) International publication number:
**WO 2025/020088 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Bitdeer Semiconductor Technology PTE. LTD.**
**049514 Singapore (SG)**

(72) Inventors:
• **SUN, Wenzhong**
  **Hong Kong (CN)**
• **ZHANG, Yanming**
  **Hong Kong (CN)**

(74) Representative: **Metida**
**Gyneju str. 16**
**01109 Vilnius (LT)**

(54) **HIGH-YIELD BITCOIN MINING MACHINE MINING SYSTEM AND METHOD**

(57) The present invention provides a high-yield Bitcoin miner mining system. The system comprises: at least one set of third party server, a PC running a Miner Manager; and at least one miner, wherein the proxy server accesses the third party server to obtain information including a coin price, an all-network hashrate, and a block reward; the PC-side tool Miner Manager runs in a miner local area network and accesses the proxy server regularly to obtain the newest coin price, and meanwhile a user inputs an electricity price curve through the PC; the Miner Manager requests the server for the coin price, all-network hashrate and block reward regularly according to a time set by the user, and sends the obtained information through the local area network to all miners in the local area network; the miner computes according to the information to decide whether to modify the current operation parameters; the miner automatically computes and adjusts the operation parameter to an optimal operating point according to the above information, to obtain a maximum yield.

FIG. 4

**Description**

**FIELD**

The present invention relates to the field of computer technologies, and particularly to a high-yield bitcoin miner mining system and a method thereof.

BACKGROUND

In the prior art, a bitcoin miner is a computer for earning bitcoins. Such a type of computers use a dedicated hash chip to run a specific algorithm and may obtain corresponding bitcoins after communicating with a remote server. The miner comprises a plurality of hash boards, runs a specific software system and algorithm, and needs to consume a lot of electrical energy to generate the hashrate. The miner's mining yield depends on real-time coin price, electricity price and power ratio. The electrical energy consumed by per-unit hashrate is referred to as the power ratio. The power ratio of the miner is affected by a plurality of factors, such as the design and manufacture of the hash chip; the design and manufacture of the whole machine; a working environment temperature etc. The power ratio is a key indicator for evaluating a miner in the industry. The current miner manufactures generally reduce the power ratio by improving the design and manufacture of the chips and the whole machine to achieve the rise of the client's benefits. Different machine types are divided according to different power ratios for selection by the client, and meanwhile limited working modes are provided on a certain model of machine for selection by the client.

Miners typically come pre-configured with the following two operating modes:

1. A low-power consumption mode: this mode is used when the current coin price is at a low point, and a proportion of electricity costs increases. The proportion of the electricity costs is reduced and the yield is enhanced by reducing the energy consumption ratio.

2. A high-performance mode: this mode is used when the current coin price is at a peak, and the proportion of electricity costs decreases. The yield can be enhanced by improving the hashrate of the miners.

Once the client buys a certain model of machine, whether to power on the machine can be selected only according to factors such as the power ratio, the real-time coin price and electricity price of the mining site in a relatively fixed operating mode, to ensure the positive yield. However, as stated above, since the hash chips and the power ratios of the miners are affected by multiple factors, the parameters of the miners cannot be adaptively adjusted according to an actual environment, and an optimal yield cannot be achieved in several rough operating modes.

Therefore, the drawbacks existing in the prior art are as follows:

1. It is impossible to adaptively adjust operating parameters of the miners by tracking the coin price and electricity price in real time to achieve the purpose of real-time optimal yield.

2. It is impossible to track, in a long time period, changes of the actual performance of the chips on the hash board caused by the operating environment and operation duration, and to adaptively adjust the operation parameters of the miners to achieve the optimal yield.

3. The switching of the operating modes of the miners depends on the operating and maintaining personnel of the miners, and finer regulations require substantial specialized knowledge, which is often difficult for ordinary miner operating and maintaining personnel to achieve.

In addition, technical terms often used in the prior art includes:

Bitcoin: a virtual cryptocurrency which is not issued by any specific monetary authority and is generated through a lot of computations according to a specific algorithm. The Bitcoin economy uses a distributed database composed of numerous nodes across the entire P2P network to verify and record all transaction behaviors, and employs a cryptographic design to ensure security at every stage of currency circulation.

TH/s: the computational speed of the hash function is $10^{12}$ calculations per second.

Hashrate: a speed at which the miner computes the hash function, measured in TH/S.

Block Reward: a reward obtained by the miner after solving a relevant mathematical problem and creating a new block through the hashrate.

Block Time: theoretically, a new block is generated at an interval of 10 minutes.

All-network Hashrate: a sum of the hashrates of all miners participating the mining in the Bitcoin network.

Coin Price: a price of Bitcoins.

Power ratio: the ratio is measured in W/T and indicates how many watts of electrical energy are consumed to achieve 1 TH of hashrate.

Hash Board: a PCB board on which hash chips are integrated.

Operating Mode: a state in which the miner operates at different power ratios.

PC: a Personal Computer.

Miner Manager: a management software for a miner (or a miner cluster) that runs on the PC.

API: Application Programming Interface.

SUMMARY

To solve the above problem, an object of the present application is to dynamically adjusting miner parameters to achieve an optimal yield by tracking the coin price, electricity price and operating environment in real time and detecting the real-time performance of hash chips.

Specifically, the present invention provides a high-yield Bitcoin miner mining system, the system comprising: at least one set of third party server for providing information about a coin price, an all-network hashrate, and a block reward for an external query; and at least one miner, and further comprising:

a proxy server for obtaining information about the coin price, the all-network hashrate, and the block reward from the third party server;

a PC-side tool Miner Manager which is, as a PC-side miner management software tool, is used for obtaining the electricity price; used for configuring operation parameters for the miner and performing remote control to turn on or off the miner; used for obtaining miner operation data in real time and monitoring whether a miner operation state is normal; also used for scanning and detecting an IP of the miner since the miner does not include a human-machine interaction interface such as a screen;

the Miner Manager obtains information about the coin price, the all-network hashrate and the block reward by accessing the proxy server, and sends the above information to the miner;

the PC including the Miner Manager operates in a miner local area network, the Miner Manager accesses the proxy server regularly to obtain the newest coin price, meanwhile a user inputs an electricity price curve through the PC, and the PC sends the coin price, the all-network hashrate, block reward and electricity price to all miners in the miner local area network; comprising:

the Miner Manager requests the server for the coin price, all-network hashrate and block reward regularly according to a time set by the user, and broadcasts, through the miner local area network, to send the obtained information to all miners in the local area network; the miner computes according to the newest coin price information to decide whether to modify the current operation parameters;

the Miner Manager monitors a current system time of the PC in real time according to the electricity price curve set by the user, and when the system time is equal to the time set by the user, broadcasts the electricity price to all miners in the local area network through the local area network according to the electricity price set by the user; the miner computes according to the newest electricity price to decide whether to modify the current operation parameters;

wherein the current operation parameters to be modified comprise a chip voltage, a target power ratio and a chip target control temperature; a condition for judging the necessity for the modification is using a new input parameter when a calculated chip voltage change amplitude for final operation is 2 mv or a calculated chip target control temperature change amplitude for final operation is greater than 2°C, otherwise this parameter update is neglected;

that is, the miner automatically computes and adjusts the operation parameter to an optimal power ratio according to the above information, and the optimal power ratio enables the miner to operate at a maximum hashrate under conditions of current coin price, electricity price, all-network hashrate and block reward, to obtain a maximum yield.

The third party server is a third party service provider, and the proxy server obtains the coin price, the all-network hashrate and the block reward through an API which is made open to the external by the third party service provider; the APIs provided by different third party service providers are different, or the information provided is incomplete and the information provided by a plurality of third party service providers needs to be fused together to work out desired information; the form of the API is a GET/POST request based on a HTTP(S), and provides JSON-format request data to the server, and the server returns JSON-format result data; the third party service provider includes a cryptocurrency exchange and a mining pool.

The user inputs the electricity price curve through the PC because the electricity prices in different regions are different, and the user needs to manually input and set the electricity price according to the local electricity price; the sending, by the PC, the coin price, the all-network hashrate, the block reward and the electricity price to all miners in the miner local area network means sending by the Miner Manager at the PC side to the miners in the local area network regularly, wherein a sending time is: 1) a coin price synchronization time set by the user; 2) an electricity price update time set by the user.

A management interface of the Miner Manager at least comprises three areas:

Area 1 for displaying the current coin price, all-network hashrate and block reward obtained from the proxy server;

Area 2 for setting a coin price synchronization time within one day, where the user needs to set an update time; when the time is equal to the set time, the Miner Manager requests a newest coin price from the proxy server, wherein the coin price synchronization time may be set in a range of 00:00-23:59;

Area 3 for setting the electricity price within one day; the user may set an electricity price curve according to a fluctuation of his own actual electricity price, wherein the update time of the electricity price may be set in a range of 00:00-23:59;

the Miner Manager monitors the current system time of the PC in real time according to the electricity price curve set by the user, and broadcasts the electricity price to all miners in the local area network through the local area network according to the electricity price set by the user, when the system time is equal to the time set by the user,

when the Miner Manager monitors the current system time of the PC in real time according to the electricity price curve set by the user, the Miner Manager detects and compares the system time and the update time of and the electricity price set by the user in real time by taking the current system time of the PC as a reference; when the system time is within a certain electricity price time period set by the user and the newest electricity price is not equal to the current electricity price, the electricity price is updated to the miners.

The modifying the current operation parameters means that where any parameter in the coin price, the electricity price, the block reward and the all-network hashrate changes, it is possible to trigger the modification of the miner operation parameters including the chip voltage, the target power ratio and the chip target control temperature in a case where; it is assumed that the chip voltage, the temperature, the power ratio and the hashrate are as shown in the following query table:

| Chip temperature (°C) | Chip voltage (mv) | Power ratio (W/T) | Chip hashrate (THS) |
| --- | --- | --- | --- |
| 20 | 380 | 47 | 0.189 |
| 20 | 390 | 50 | 0.210 |
| 20 | 400 | 53 | 0.226 |

(continued)

| Chip temperature (°C) | Chip voltage (mv) | Power ratio (W/T) | Chip hashrate (THS) |
|---|---|---|---|
| ... | | | |
| 80 | 380 | 53 | 0.259 |
| 80 | 390 | 56 | 0.276 |
| ... | ... | ... | ... |

the data in the above table originates from a lot of chip sort tests and miner production tests. It is known from the above table that the power ratio and hashrate of the chip are already known at a given temperature and a given voltage; conversely, the chip voltage and chip hashrate can be obtained through the power ratio and the chip temperature;

the mining yield depends on the power ratio, the coin price, the electricity price, the all-network hashrate and the block reward of the miners, wherein the coin price and the all-network hashrate fluctuate all the time, and the electricity price also fluctuates according to local situations, and the power ratio of the miner needs to be dynamically adjusted in real time according to the coin price, the electricity price, the all-network hashrate and the block reward to achieve a dynamic maximum yield.

The present application further relates to a high-yield Bitcoin miner mining method, comprising the following steps:

S1: setting a proxy server and a PC-side miner management software tool Miner Manager so that the proxy server and the Miner Manager can be used in cooperation; wherein

the proxy server is used for obtaining information about a coin price, an all-network hash rate and a block reward;

the Miner Manager is used for obtaining an electricity price; used for configuring operation parameters for the miner and performing remote control to turn on or off the miner; used for obtaining miner operation data in real time and monitoring whether a miner operation state is normal; also used for scanning and detecting an IP of the miner;

S2: the proxy server obtains information about the coin price, the all-network hashrate, and the block reward from the third party server through the network; the third party server provides information about the coin price, the all-network hashrate, and the block reward for an external query;

S3: the Miner Manager obtains information about the coin price, the all-network hashrate and the block reward by accessing the proxy server; the PC containing the Miner Manger operates in the miner local area network, and accesses the proxy server regularly to obtain the newest coin price, while the user inputs the electricity price curve through the PC;

sending, by the PC, the coin price, the all-network hashrate, the block reward and the electricity price to all miners in the miner local area network comprising:

the Miner Manager requests the coin price, the all-network hashrate and the block reward from the server regularly according to a time set by the user, and broadcasts, through the miner local area network, the requested information to all miners in the local area network;

the Miner Manager monitors a current system time of the PC in real time according to an electricity price curve set by the user, and when the system time is equal to the time set by the user, broadcasts the electricity price to all miners in the local area network through the local area network according to the electricity price set by the user;

S4: the miner computes and decides whether to modify the current operation parameters according to the newest coin price information; the miner computes and decides whether to modify the current operation parameters according to the newest electricity price; the current operation parameters to be modified comprise chip voltage, target power ratio and chip target control temperature; a condition for judging the necessity for the modification is using new input parameters when a calculated chip voltage change amplitude for final operation is 2 mv or a calculated chip target control temperature change amplitude for final operation is greater than 2°C, otherwise this parameter update is neglected;;

that is, the miner automatically computes and adjusts the operation parameters to an optimal power ratio according to the above information, and the optimal power ratio enables the miner to operate at a maximum hashrate under conditions of current coin price, electricity price, all-network hashrate and block reward, to obtain a maximum yield.

In this method, the information about the coin price and the all-network hashrate originate from the third party server, i.e., the third party service provider; when the third party server shuts down due to force majeure, it needs to be replaced with other third party service provider; the replacement of the third party service provider only requires the modification of the API of the proxy server, and the miner software needn't be modified and can be adapted for multiple service providers; use of the proxy server in cooperation with the management of the Miner Manager in the local area network makes the network interface of the miner not exposed to an external network, and meanwhile the communication between the Miner Manager and the proxy server achieves bi-directional authentication encryption and more safety; by accessing the proxy server through the Miner Manager, the coin price information is broadcast in the local area network to reduce network access traffic.

Step S4 further comprises:

setting a query table, wherein the data in the table originates from chip sort tests and miner production tests; the power ratio and hashrate of the chips are already known at a given temperature and a given voltage; conversely, the chip voltage and chip hashrate can be obtained according to the power ratio and the chip temperature; it is assumed that the chip voltage, the temperature, the power ratio and the hashrate are as shown in the following query table:

| Chip temperature (°C) | Chip voltage (mv) | Power ratio (W/T) | Chip hashrate (THS) |
|---|---|---|---|
| 20 | 380 | 47 | 0.189 |
| 20 | 390 | 50 | 0.210 |
| 20 | 400 | 53 | 0.226 |
| ... | | | |
| 80 | 380 | 53 | 0.259 |
| 80 | 390 | 56 | 0.276 |
| ... | ... | ... | ... |

the mining yield depends on the miner's power ratio, the coin price, the electricity price, the all-network hashrate and the block reward. The coin price and the all-network hashrate fluctuate all the time, and the electricity price also fluctuates according to local situations, and the power ratio of the miner needs to be dynamically adjusted in real time according to the coin price, the electricity price, the all-network hashrate and the block reward to achieve maximization of a dynamic yield;

corresponding profits may be calculated by traversing all chip voltages and power ratios by looking up the table at a given chip temperature; a maximum value, i.e., a maximum yield is found from these profits;

when the coin price, the electricity price, the block reward, the all-network hashrate and the chip temperature change, the above traversing and search process is repeated to allow the miner to always operate at a maximum-yield operating point.

A flow of achieving the maximization of the yield comprises:

let the chip hashrate be chip_hashrate, chip voltage be chip_volt, the power ratio be miner_power_ratio, the number of chips of the miner be chip_count, and the miner hashrate be miner_hashrate,

let the all-network hashrate be network _hashrate, the coil price be btc_price, the block reward be block_reward, a block time interval be block_interval, a total number of blocks produced in 24 hours in all the network be block_count, a total number of block rewards in 24 hours in all the network be total_block_reward, and a revenue per T hashrate in 24 hours be ths_revenue,

let the power of the miner be miner_power, the electricity price be electric_price, and an electricity cost in 24 hours be electric_cost,

let a revenue in 24 hours be revenue, and a profit in 24 hours be profit,

then,

the miner hashrate: miner_hashrate = chip_hashrate * chip_count;

the block time interval: block_interval = 600 seconds, which is a theoretical number designed according to a Bitcoin white paper;

the total number of blocks produced in 24 hours in all the network: block_count = 24 * 3600 / 600, i.e., block_count = 144;

the total number of block rewards in 24 hours in all the network: total_block_reward = block_reward * block_count, i.e., total_block_reward = block_reward * 144;

the revenue per T hashrate in 24 hours: ths_revenue = total_block_reward * btc_price / network_hashrate;

so far, the revenue per T hashrate in 24 hours is obtained, and the current temperature of the chip is obtained by a temperature sensor in the chip;

all possible profits are calculated by traversing all voltages, power ratios and chip hashrates in the above query table at a given temperature:

the power of the miner: miner_power = miner_hashrate *miner_power ratio

the electricity cost in 24 hours: electric_cost = electric_price * 24 * miner_power / 1000

the revenue in 24 hours: revenue = ths_revenue * miner_hashrate

the profit in 24 hours: profit = revenue - electric_cost.

In said step S4,

there is a curve of power ratios corresponding to different voltages in a case where the miner chip is at a given temperature; as the voltage rises, the power ratios are in a rising tendency;

there is a curve of power ratios corresponding to different temperatures in a case where the miner chip is at a given voltage; as the temperature rises, the power ratios are in a rising tendency;

there are different power ratios in the case where the miner chip is at different voltages and different temperatures; adjusting the operating parameters of the chip by taking a single hash board as a whole, including adjusting the chip voltage by adjusting a power supply output voltage and adjusting a chip frequency by issuing a frequency scaling command to the chip, calculating by traversing or according to chip mass production test data to obtain an estimated power ratio change range, i.e., a power ratio adjustable range to provide data reference for subsequent selection of a power ratio enabling the optimal yield;

the miner hashrate is enhanced while the miner power ratio is reduced; however, as the hashrate increases, the power ratio also increases correspondingly, so there exists an optimal power ratio enabling a maximum profit:

given the coin price, electricity price and block reward, as the power ratio rises, the profit rises first and then falls, cases vary with different chips and different machine situations, and the power ratio enabling the maximum profit is selected; when the coin price or electricity price fluctuates, the optimal power ratio should be re-calculated;

assuming that the coin price is at a low level in the market and a proportion of the electricity cost rises, it is necessary to reduce the proportion of the electricity cost by reducing the miner power ratio to achieve the maximum yield on the premise of the current coin price and electricity price;

assuming that the coin price is at a high level in the market and the proportion of the electricity cost reduces, it is necessary to increase the miner hashrate to achieve maximum yield at the current coin price and electricity price;

a feasible power ratio range is found by predicting or by traversing regularly, and an estimated power ratio range is obtained by grouping the chips in advance and applying them to different hash boards according to the mass production test data of the chips; as the power ratio test data accumulates, the estimated power ratio range under a certain process can be summarized for use in actual products.

Thus, advantages of the present application lie in tracking changes of the actual performance of the chips on the hash board caused by the operating environment and operation duration by obtaining the coin price and electricity price in real time on the premise of ensuring the network safe, and adjusting the operation parameters to allow the miner to always keep the optimal mining yield. That is, the advantages of the solution are as follows:

1. The electricity price information only needs to be configured once through the Miner Manager, i.e., the electricity price information may be sent to all miners through the local area network, thereby avoiding a lot of repeated work caused by configuring the electricity price for all miners, respectively;

2. The proxy server accesses the third party server at a fixed time interval, which prevents a lot of accesses from causing a pressure on the third party server;

3. The Miner Manager requests the proxy server for data regularly at the synchronized update time of the coin price, all-network hashrate and block reward set by the user, sends the obtained data to all miners through the local area network, plays a role of a proxy, and avoids an excessive access pressure on the proxy server.

4. When the access to the third party server fails for a reason such as a shutdown due to force majeure, the third party server needs to be replaced; only the configuration or API interface of the proxy server needs to be modified, and the Miner Manager and the miner software needn't be updated, thereby ensuring the compatibility and easy use of the solution.

BRIEF DESCRIPTION OF THE DRAWINGS

The figures described here are used to provide further understanding of the present invention, constitute a part of the present application, and are not construed as limiting the present invention.

FIG. 1 is a schematic diagram of a layout of a system of third party servers directly accessed by a Miner Manager.

FIG. 2 is a schematic diagram of a system of third party server directly accessed by miners.

FIG. 3 is a schematic diagram of a layout of a system of third party servers accessed by miners via a proxy server.

FIG. 4 is a schematic diagram of a layout of a whole system according to the present application.

FIG. 5 is a schematic diagram of a management interface of a Miner Manager involved in the present application.

FIG. 6 is a schematic diagram of a curve of power ratios corresponding to different voltages when a chip is at a given temperature.

FIG. 7 is a schematic diagram of a curve of power ratios corresponding to different temperatures when a chip is at a given voltage.

FIG. 8 is a schematic diagram showing that there is an optimal power ratio that enables a maximum profit according to the present application.

FIG. 9 is a flow chart of step S4 obtaining a maximum profit according to the present application.

DETAILED DESCRIPTION OF EMBODIMENTS

The present invention will be described in more detail with reference to the figures to make technical content and advantages of the present invention more apparent. The block diagrams shown in the accompanying drawing are merely functional entities and do not necessarily correspond to physically independent entities. These functional entities may be implemented in a software form, or in one or more hardware modules or integrated circuits, or in different networks and/or processor apparatuses and/or microcontroller apparatuses.

During the design of a high-yield Bitcoin miner mining system, solutions that can be employed includes the following solutions:

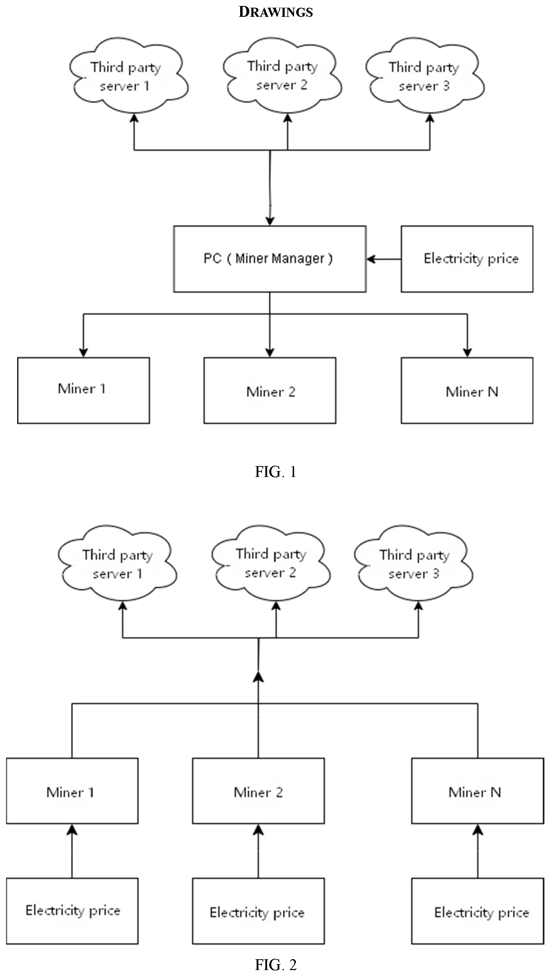

Solution 1: a Miner Manager directly accesses a third party server, as shown in FIG. 1. However, the solution has the following problem:

When the access to the third party server fails for a reason such as a shutdown due to force majeure, the third party server needs to be replaced, whereupon a server configuration or API interface of the Miner Manager needs to be modified to match with an externally provided interface of a new third party server, thereby causing the compatibility of the Miner Manager to become poor so that the user needs to modify and update the Miner Manager repeatedly.

Solution 2: the miner directly accesses the third party server, as shown in FIG. 2. However, this solution has the following problems:

1. Electricity price information needs to be configured for each set of miner, which causes a lot of repeated work;

2. A large number of miners access the third party server, which causes an excessive pressure on the access to the server.

3. When the access to the third party server fails for a reason such as a shutdown due to force majeure, the third party server needs to be replaced, whereupon a server configuration or API interface of each set of miner needs to be modified to match with an externally provided interface of a new third party server, thereby causing the compatibility of the miner software to become poor so that the user needs to modify and update the miner software repeatedly.

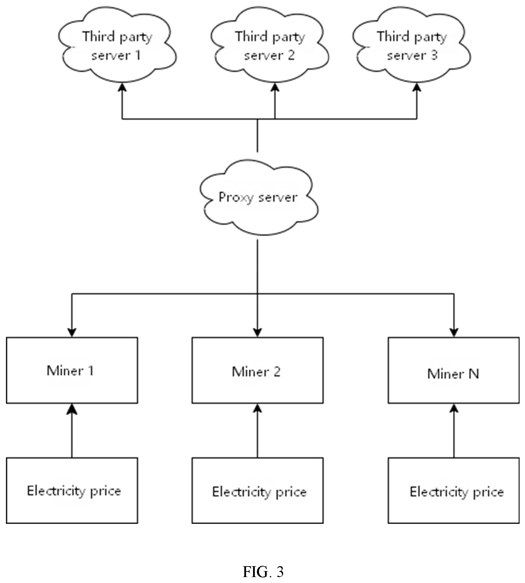

Solution 3: the miner accesses the third party server via a proxy server, as shown in FIG. 3. However, this solution has the following problems:

1. Electricity price information needs to be configured for each set of miner, which causes a lot of repeated work;

2. A large number of miners access the third party server, which causes an excessive pressure on the access to the server.

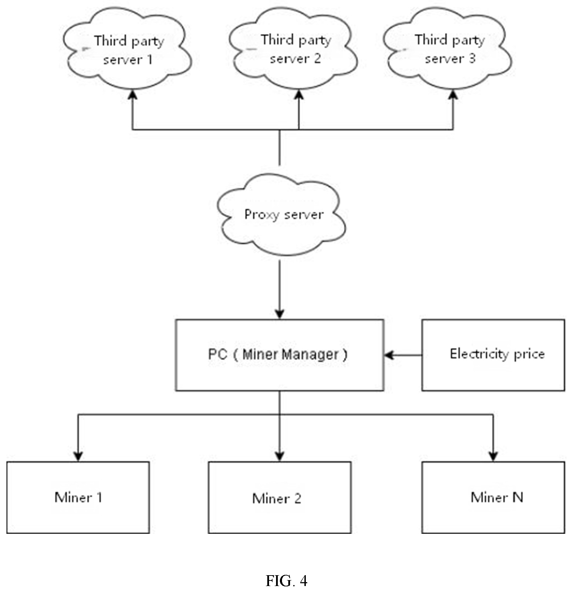

Finally, an embodiment of the present invention obtains a high-yield Bitcoin miner mining system, as shown in FIG. 4, the system comprising: at least one set of third party server for providing information about a coin price, an all-network hashrate, and a block reward for an external query; and at least one set of miner, and further comprising:

a proxy server for obtaining information about the coin price, the all-network hashrate, and the block reward from the third party server;

a PC-side tool Miner Manager which is, as a PC-side miner management software tool, is used for obtaining the electricity price; used for configuring operation parameters for the miner and performing remote control to turn on or off the miner; used for obtaining miner operation data in real time and monitoring whether a miner operation state is normal; also used for scanning and detecting the IP of the miner since the miner does not include a human-machine interaction interface such as a screen;

the Miner Manager obtains information about the coin price, the all-network hashrate and the block reward by accessing the proxy server, and sends the above information to the miner;

the PC including the Miner Manager operates in a miner local area network, the Miner Manager accesses the proxy server regularly to obtain the newest coin price, meanwhile a user inputs an electricity price curve through the PC, and the PC sends the coin price, the all-network hashrate, block reward and electricity price to all miners in the miner local area network; comprising:

the Miner Manager requests the server for the coin price, all-network hashrate and block reward regularly according to a time set by the user, and broadcasts, through the miner local area network, to send the obtained information to all miners in the local area network; the miner computes according to the newest coin price information to decide whether to modify the current operation parameters;

The Miner Manager monitors a current system time of the PC in real time according to the electricity price curve set by the user, and when the system time is equal to the time set by the user, broadcasts the electricity price to all miners in the local area network through the local area network according to the electricity price set by the user; the miner computes according to the newest electricity price to decide whether to modify the current operation parameters;

wherein the current operation parameters to be modified comprise a chip voltage, a target power ratio and a chip target control temperature; a condition for judging the necessity for the modification is using a new input parameter when a calculated chip voltage change amplitude for final operation is 2 mv or a calculated chip target control temperature change amplitude for final operation is greater than 2°C, otherwise this parameter update is neglected;

that is, the miner automatically computes and adjusts the operation parameter to an optimal power ratio according to the above information, and the optimal power ratio enables the miner to operate at a maximum hashrate under conditions of current coin price, electricity price, all-network hashrate and block reward, to obtain a maximum yield.

The third party server is a third party service provider, and the proxy server obtains the coin price, the all-network hashrate and the block reward through an API which is made open to the external by the third party service provider; the APIs provided by different third party service providers are different, or the information provided is incomplete and the information provided by a plurality of third party service providers needs to be fused together to work out desired information; the form of the API is a GET/POST request based on a HTTP(S), and provides JSON-format request data to the server, and the server returns JSON-format result data; the third party service provider includes a cryptocurrency exchange and a mining pool.

The user inputs the electricity price curve through the PC because the electricity prices in different regions are different, and the user needs to manually input and set the electricity price according to the local electricity price; the sending, by the PC, the coin price, the all-network hashrate, the block reward and the electricity price to all miners in the miner local area network means sending by the Miner Manager at the PC side to the miners in the local area network regularly, wherein a sending time is: 1) a coin price synchronization time set by the user; 2) an electricity price update time set by the user.

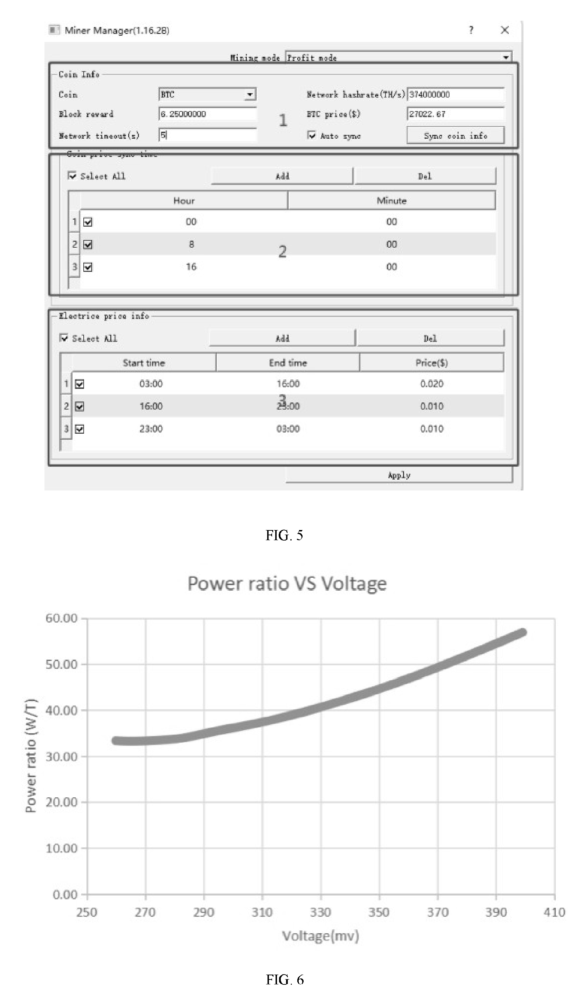

As shown in FIG. 5, a management interface of the Miner Manager at least comprises three areas:

Area 1 for displaying the current coin price, all-network hashrate and block reward obtained from the proxy server;

Area 2 for setting a coin price synchronization time within one day, where the user needs to set an update time; when the time is equal to the set time, the Miner Manager requests a newest coin price from the proxy server, wherein the coin price synchronization time may be set in a range of 00:00-23:59;

Area 3 for setting the electricity price within one day; the user may set an electricity price curve according to a fluctuation of his own actual electricity price, wherein the update time of the electricity price may be set in a range of 00:00-23:59; for example, the electricity price in the time period 00:00-08:00 every day is 0.02$; the electricity price in the time period 08:01-23:59 every day is 0.05$;

The Miner Manager monitors the current system time of the PC in real time according to the electricity price curve set by the user, and broadcasts the electricity price to all miners in the local area network through the local area network according to the electricity price set by the user, when the system time is equal to the time set by the user,

The monitoring, by the Miner Manager, the current system time of the PC in real time according to the electricity price curve set by the user is detecting and comparing an update time of the system time and the electricity price set by the user in real time by taking the current system time of the PC as a reference; when the system time is within a certain electricity price time period set by the user and the newest electricity price is not equal to the current electricity price, the electricity price is updated to the miners. The electricity price is invariable in a certain time period, an on-peak electricity price and an off-peak electricity price; while the electricity price is set, a start time an end time of the electricity price need to be set.

The modifying the current operation parameters means that it is possible to trigger the modification of the miner operation parameters, i.e., the chip voltage, the target power ratio and the chip target control temperature in a case where any parameter in the coin price, the electricity price, the block reward and the all-network hashrate changes;

It is assumed that the chip voltage, the temperature, the power ratio and the hashrate are as shown in the following query table:

| Chip temperature (°C) | Chip voltage (mv) | Power ratio (W/T) | Chip hashrate (THS) |
|---|---|---|---|
| 20 | 380 | 47 | 0.189 |
| 20 | 390 | 50 | 0.210 |
| 20 | 400 | 53 | 0.226 |
| ... | | | |
| 80 | 380 | 53 | 0.259 |
| 80 | 390 | 56 | 0.276 |
| ... | ... | ... | ... |

The data in the above table originates from a lot of chip sort tests and miner production tests. It is known from the above table that the power ratio and hashrate of the chip are already known at a given temperature and a given voltage; conversely, the chip voltage and chip hashrate can be obtained through the power ratio and the chip temperature;

The mining yield depends on the power ratio, the coin price, the electricity price, the all-network hashrate and the block reward of the miners, wherein the coin price and the all-network hashrate fluctuate all the time, and the electricity price also fluctuates according to local situations, and the power ratio of the miner needs to be dynamically adjusted in real time according to the coin price, the electricity price, the all-network hashrate and the block reward to achieve a dynamic maximum yield.

In addition, the high-yield Bitcoin miner mining method according to the present application comprises the following steps:

S1: setting a proxy server and a PC-side miner management software tool Miner Manager so that the proxy server and the Miner Manager can be used in cooperation; wherein

the proxy server is used for obtaining information about a coin price, an all-network hash rate and a block reward;

the Miner Manager is used for obtaining an electricity price; used for configuring operation parameters for the miner and performing remote control to turn on or off the miner; used for obtaining miner operation data in real time and monitoring whether a miner operation state is normal; also used for scanning and detecting an IP of the miner;

S2: the proxy server obtains information about the coin price, the all-network hashrate, and the block reward from the third party server through the network; the third party server provides information about the coin price, the all-network hashrate, and the block reward for an external query;

S3: the Miner Manager obtains information about the coin price, the all-network hashrate and the block reward by accessing the proxy server; the PC containing the Miner Manger operates in the miner local area network, the Miner Manger accesses the proxy server regularly to obtain the newest coin price, and meanwhile the user inputs the electricity price curve through the PC;

The sending, by the PC, the coin price, the all-network hashrate, the block reward and the electricity price to all miners in the miner local area network comprises:

the Miner Manager requests the server for the coin price, the all-network hashrate and the block reward regularly according to a time set by the user, and broadcasts, through the miner local area network, to send the obtained information to all miners in the local area network;

the Miner Manager monitors a current system time of the PC in real time according to an electricity price curve set by the user, and when the system time is equal to the time set by the user, broadcasts the electricity price to all miners in the local area network through the local area network according to the electricity price set by the user;

S4: the miner computes according to the newest coin price information to decide whether to modify the current operation parameters; the miner computes according to the newest electricity price to decide whether to modify the current operation parameters; the current operation parameters to be modified comprise a chip voltage, a target power ratio and a chip target control temperature; a condition for judging the necessity for the modification is using a new input parameter when a calculated chip voltage change amplitude for final operation is 2 mv or a calculated chip target control temperature change amplitude for final operation is greater than 2°C, otherwise this parameter update is neglected;

that is, the miner automatically computes and adjusts the operation parameter to an optimal power ratio according to the above information, and the optimal power ratio enables the miner to operate at a maximum hashrate under conditions of current coin price, electricity price, all-network hashrate and block reward, to obtain a maximum yield.

In this method, the information about the coin price and the all-network hashrate originate from the third party server, i.e., the third party service provider; when the third party server shuts down due to force majeure, it needs to be replaced with other third party service provider; the replacement of the third party service provider only requires the modification of the API of the proxy server, and the miner software needn't be modified and can be adapted for multiple service providers; use of the proxy server in cooperation with the management of the Miner Manager in the local area network makes the network interface of the miner not exposed to an external network, and meanwhile the communication between the Miner Manager and the proxy server achieves bi-directional authentication and encryption and more safety; the coin price information is broadcast in the local area network, and a network access traffic is reduced in a way that the Miner Manager accesses the proxy server.

Step S4 further comprises:

setting a query table, wherein the data in the table originates from chip sort tests and miner production tests; the power ratio and hashrate of the chips are already known at a given temperature and a given voltage; conversely, the chip voltage and chip hashrate can be obtained according to the power ratio and the chip temperature; it is assumed that the chip voltage, the temperature, the power ratio and the hashrate are as shown in the following query table:

| Chip temperature (°C) | Chip voltage (mv) | Power ratio (W/T) | Chip hashrate (THS) |
|---|---|---|---|
| 20 | 380 | 47 | 0.189 |
| 20 | 390 | 50 | 0.210 |
| 20 | 400 | 53 | 0.226 |
| ... | | | |
| 80 | 380 | 53 | 0.259 |
| 80 | 390 | 56 | 0.276 |
| ... | ... | ... | ... |

The mining yield depends on the miner's power ratio, the coin price, the electricity price, the all-network hashrate and the block reward. The coin price and the all-network hashrate fluctuate all the time, and the electricity price also fluctuates according to local situations, and the power ratio of the miner needs to be dynamically adjusted in real time according to the coin price, the electricity price, the all-network hashrate and the block reward to achieve maximization of a dynamic yield;

Corresponding profits may be calculated by traversing all chip voltages and power ratios by looking up the table at a given chip temperature; a maximum value, i.e., a maximum yield is found from these profits;

When the coin price, the electricity price, the block reward, the all-network hashrate and the chip temperature change, the above traversing and search process is repeated to allow the miner to always operate at a maximum-yield operating point.

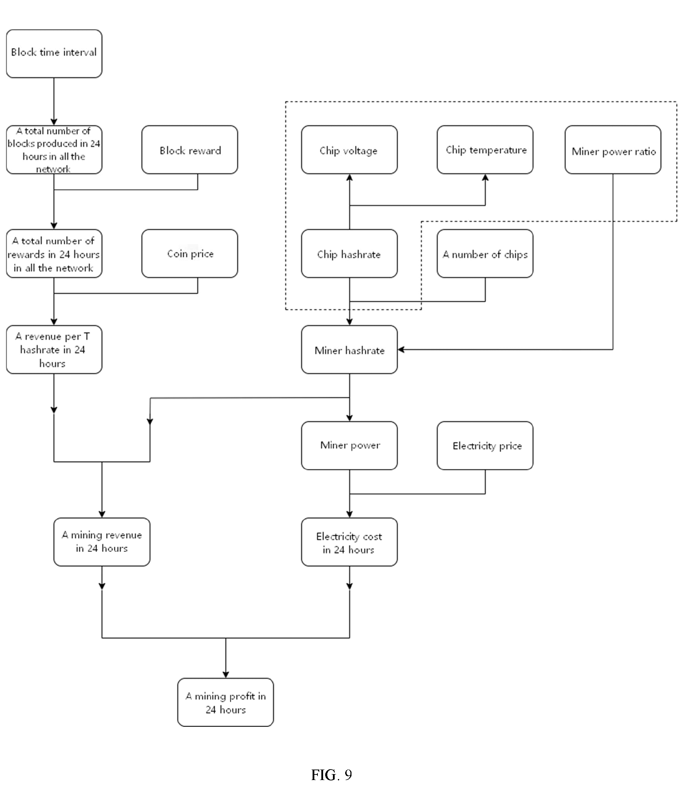

A flow of achieving the maximization of the yield comprises the following as shown in FIG. 9:

let the chip hashrate be chip _hashrate, chip voltage be chip _volt, the power ratio be miner_power_ratio, the number of chips of the miner be chip_count, and the miner hashrate be miner_hashrate,

let the all-network hashrate be network _hashrate, the coil price be btc_price, the block reward be block_reward, a block time interval be block_interval, a total number of blocks produced in 24 hours in all the network be block_count, a total number of block rewards in 24 hours in all the network be total_block_reward, and a revenue per T hashrate in 24 hours be ths_revenue,

let the power of the miner be miner_power, the electricity price be electric_price, and an electricity cost in 24 hours be electric_cost,

let a revenue in 24 hours be revenue, and a profit in 24 hours be profit,

then,

the miner hashrate: miner_hashrate = chip_hashrate * chip_count;

the block time interval: block_interval = 600 seconds, which is a theoretical number designed according to a Bitcoin white paper;

the total number of blocks produced in 24 hours in all the network: block_count = 24 * 3600 / 600, i.e., block_count = 144;

the total number of block rewards in 24 hours in all the network: total_block_reward = block_reward * block_count, i.e., total_block_reward = block_reward * 144;

the revenue per T hashrate in 24 hours: ths_revenue = total_block_reward * btc_price / network _hashrate;

so far, the revenue per T hashrate in 24 hours is obtained, and the current temperature of the chip is obtained by a temperature sensor in the chip;

all possible profits are calculated by traversing all voltages, power ratios and chip hashrates in the above query table at a given temperature:

the power of the miner: miner_power = miner_hashrate *miner_power_ratio

the electricity cost in 24 hours: electric_cost = electric_price * 24 * miner_power / 1000

the revenue in 24 hours: revenue = ths_revenue * miner_hashrate

the profit in 24 hours: profit = revenue - electric_cost.

In said step S4:

As shown in FIG. 6, there is a curve of power ratios corresponding to different voltages in a case where the miner chip is at a given temperature; as the voltage rises, the power ratios are in a rising tendency;

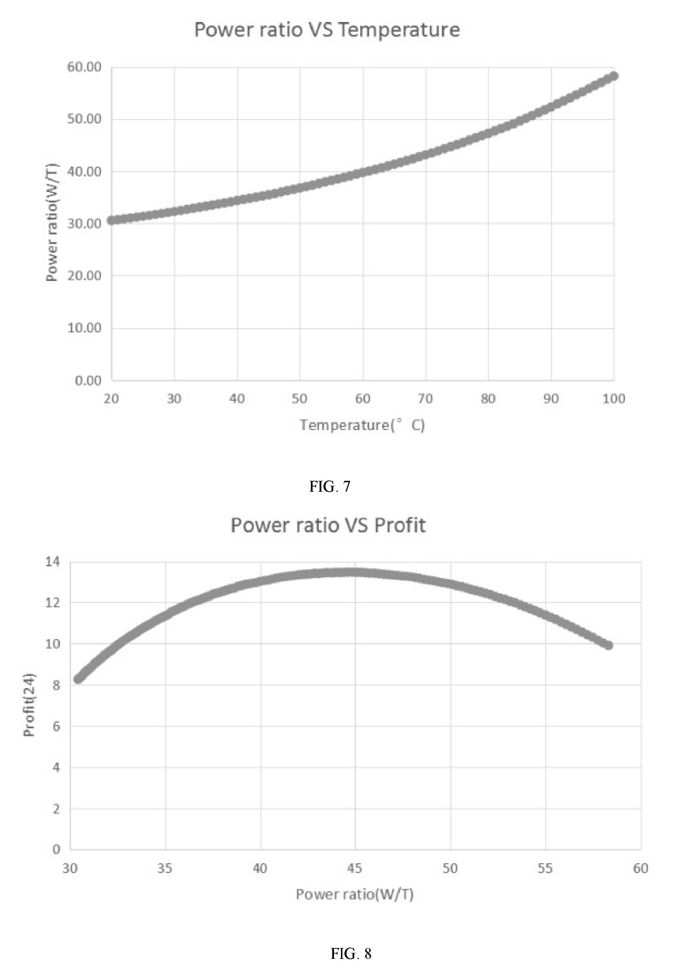

As shown in FIG. 7, there is a curve of power ratios corresponding to different temperatures in a case where the miner chip is at a given voltage; as the temperature rises, the power ratios are in a rising tendency;

Therefore, there are different power ratios in the case where the miner chip is at different voltages and different temperatures; adjusting the operating parameters of the chip by taking a single hash board a whole comprises adjusting the chip voltage by adjusting a power supply output voltage, adjusting the chip frequency by issuing a frequency scaling command to the chip, calculating by traversing or according to chip mass production test data to obtain an estimated power ratio change range, i.e., a power ratio adjustable range to provide data reference for subsequent selection of a power ratio enabling the optimal yield;

The miner hashrate is enhanced while the miner power ratio is reduced; however, as the hashrate increases, the power ratio also increases correspondingly, so there exists an optimal power ratio enabling a maximum profit:

With the coin price, electricity price and block reward being given, as the power ratio rises, the profit rises first and then falls. For example, it is assumed that the maximum profit occurs at about the power ratio 45 W/T. Cases vary with different chips and different machine situations. It is necessary to refer to FIG. 8 to select the power ratio enabling the maximum profit; when the coin price or electricity price fluctuates, the optimal power ratio should be re-calculated; the maximum profit does not have an absolute threshold. A profit as large as possible is welcome as long as the positive yield is achieved at a rated power of the power supply and at a chip temperature in a controllable range. When the coin price and electricity price change, the software re-calculates a curve showing the profit varies with the power ratio, and then the power ratio enabling the maximum profit is still selected;

Assuming that the coin price is at a low level in the market and the proportion of the electricity cost rises, it is necessary to reduce the proportion of the electricity cost by reducing the miner power ratio to achieve the maximum yield on the premise of the current coin price and electricity price;

Assuming that the coin price is at a high level in the market and the proportion of the electricity cost reduces, the maximum yield at the current coin price and electricity price needs to be achieved by enhancing the miner hashrate;

A feasible power ratio range is found by predicting or by traversing regularly, and an estimated power ratio range is obtained by grouping the chips in advance and applying them to different hash boards according to the mass production test data of the chips; as the power ratio test data accumulates, the estimated power ratio range under a certain process can be summarized for use in actual products.

To conclude, the solution of the present application can:

1. Obtain the coin price in real time;

2. Support the electricity price curve;

3. Monitor changes in the hash chip performance due to factors such as the environment and operation duration;

4. Calculate parameters enabling the optimal yield and automatically configure the parameters;

5. Broadcast the coin price and electricity price in the local area network, reduce the network access data volume and protect the miners from external attacks.

What are described above are only preferred embodiments of the present invention and not intended to limit the present invention. Those skilled in the art appreciate that the embodiments of the present invention may have various modifications or variations. Any modifications, equivalent substitutes, improvements etc. made within the spirit and principles of the present invention should all be included in the extent of protection of the present invention.

**Claims**

1. A high-yield Bitcoin miner mining system, the system comprising: at least one set of third party server for providing information about a coin price, an all-network hashrate, and a block reward for an external query; and at least one miner, wherein the system further comprises:

   a proxy server for obtaining information about the coin price, the all-network hashrate, and the block reward from the third party server;
   a PC-side tool Miner Manager which is, as a PC-side miner management software tool, is used for obtaining the electricity price; used for configuring operation parameters for the miner and performing remote control to turn on or off the miner; used for obtaining miner operation data in real time and monitoring whether a miner operation state is normal; also used for scanning and detecting an IP of the miner since the miner does not include a human-machine interaction interface such as a screen;
   the Miner Manager obtains information about the coin price, the all-network hashrate and the block reward by accessing the proxy server, and sends the above information to the miner;
   the PC including the Miner Manager operates in a miner local area network, the Miner Manager accesses the proxy server regularly to obtain the newest coin price, meanwhile a user inputs an electricity price curve through the PC, and the PC sends the coin price, the all-network hashrate, block reward and electricity price to all miners in the miner local area network; comprising:

      the Miner Manager requests the server for the coin price, all-network hashrate and block reward regularly according to a time set by the user, and broadcasts, through the miner local area network, to send the obtained information to all miners in the local area network; the miner computes according to the newest coin price information to decide whether to modify the current operation parameters;
      the Miner Manager monitors a current system time of the PC in real time according to the electricity price curve set by the user, and when the system time is equal to the time set by the user, broadcasts and sends the electricity price to all miners in the local area network through the local area network according to the electricity price set by the user; the miner computes according to the newest electricity price to decide whether to modify the current operation parameters;

wherein the current operation parameters to be modified comprise a chip voltage, a target power ratio and a chip target control temperature; a condition for judging the necessity for the modification is using a new input parameter when a calculated chip voltage change amplitude for final operation is 2 mv or a calculated chip target control temperature change amplitude for final operation is greater than 2°C, otherwise this parameter update is neglected;

that is, the miner automatically computes and adjusts the operation parameter to an optimal power ratio according to the above information, and the optimal power ratio enables the miner to operate at a maximum hashrate under conditions of current coin price, electricity price, all-network hashrate and block reward, to obtain a maximum yield.

2. The high-yield Bitcoin miner mining system according to claim 1, wherein the third party server is a third party service provider, and the proxy server obtains the coin price, the all-network hashrate and the block reward through an API which is made open to the external by the third party service provider; the APIs provided by different third party service providers are different, or the information provided is incomplete and the information provided by a plurality of third party service providers needs to be fused together to work out desired information; the form of the API is a GET/POST request based on a HTTP(S), and provides JSON-format request data to the server, and the server returns JSON-format result data; the third party service provider includes a cryptocurrency exchange and a mining pool.

3. The high-yield Bitcoin miner mining system according to claim 1, wherein the user inputs the electricity price curve through the PC because the electricity prices in different regions are different, and the user needs to manually input and set the electricity price according to the local electricity price; the sending, by the PC, the coin price, the all-network hashrate, the block reward and the electricity price to all miners in the miner local area network means sending by the Miner Manager at the PC side to the miners in the local area network regularly, wherein a sending time is: 1) a coin price synchronization time set by the user; 2) an electricity price update time set by the user.

4. The high-yield Bitcoin miner mining system according to claim 1, wherein a management interface of the Miner Manager at least comprises three areas:

Area 1 for displaying the current coin price, all-network hashrate and block reward obtained from the proxy server;

Area 2 for setting a coin price synchronization time within one day, where the user needs to set an update time; when the time is equal to the set time, the Miner Manager requests a newest coin price from the proxy server, wherein the coin price synchronization time may be set in a range of 00:00-23:59;

Area 3 for setting the electricity price within one day; the user may set an electricity price curve according to a fluctuation of his own actual electricity price, wherein the update time of the electricity price may be set in a range of 00:00-23:59;

the Miner Manager monitors the current system time of the PC in real time according to the electricity price curve set by the user, and broadcasts and sends the electricity price to all miners in the local area network through the local area network according to the electricity price set by the user, when the system time is equal to the time set by the user,

wherein when the Miner Manager monitors the current system time of the PC in real time according to the electricity price curve set by the user, the Miner Manager detects and compares the system time and the update time of and the electricity price set by the user in real time by taking the current system time of the PC as a reference; when the system time is within a certain electricity price time period set by the user and the newest electricity price is not equal to the current electricity price, the electricity price is updated to the miners.

5. The high-yield Bitcoin miner mining system according to claim 1, wherein the modifying the current operation parameters means that where any parameter in the coin price, the electricity price, the block reward and the all-network hashrate changes, it is possible to trigger the modification of the miner operation parameters including the chip voltage, the target power ratio and the chip target control temperature;

it is assumed that the chip voltage, the temperature, the power ratio and the hashrate are as shown in the following query table:

| Chip temperature (°C) | Chip voltage (mv) | Power ratio (W/T) | Chip hashrate (THS) |
| --- | --- | --- | --- |
| 20 | 380 | 47 | 0.189 |
| 20 | 390 | 50 | 0.210 |

(continued)

| Chip temperature (°C) | Chip voltage (mv) | Power ratio (W/T) | Chip hashrate (THS) |
|---|---|---|---|
| 20 | 400 | 53 | 0.226 |
| ... | | | |
| 80 | 380 | 53 | 0.259 |
| 80 | 390 | 56 | 0.276 |
| ... | ... | ... | ... |

the data in the above table originates from a lot of chip sort tests and miner production tests. It is known from the above table that the power ratio and hashrate of the chip are already known at a given temperature and a given voltage; conversely, the chip voltage and chip hashrate can be obtained through the power ratio and the chip temperature;

the mining yield depends on the power ratio, the coin price, the electricity price, the all-network hashrate and the block reward of the miners, wherein the coin price and the all-network hashrate fluctuate all the time, and the electricity price also fluctuates according to local situations, and the power ratio of the miner needs to be dynamically adjusted in real time according to the coin price, the electricity price, the all-network hashrate and the block reward to achieve a dynamic maximum yield.

6. A high-yield Bitcoin miner mining method, wherein the method comprises the following steps:

S1: setting a proxy server and a PC-side miner management software tool Miner Manager so that the proxy server and the Miner Manager can be used in cooperation; wherein

the proxy server is used for obtaining information about a coin price, an all-network hash rate and a block reward;

the Miner Manager is used for obtaining an electricity price; used for configuring operation parameters for the miner and performing remote control to turn on or off the miner; used for obtaining miner operation data in real time and monitoring whether a miner operation state is normal; also used for scanning and detecting an IP of the miner;

S2: the proxy server obtains information about the coin price, the all-network hashrate, and the block reward from the third party server through the network; the third party server provides information about the coin price, the all-network hashrate, and the block reward for an external query;

S3: the Miner Manager obtains information about the coin price, the all-network hashrate and the block reward by accessing the proxy server; the PC containing the Miner Manger operates in the miner local area network, and the Miner Manager accesses the proxy server regularly to obtain the newest coin price, while the user inputs the electricity price curve through the PC;

sending, by the PC, the coin price, the all-network hashrate, the block reward and the electricity price to all miners in the miner local area network, comprising:

the Miner Manager requests the coin price, the all-network hashrate and the block reward from the server regularly according to a time set by the user, and broadcasts, through the miner local area network the requested information to all miners in the local area network;

the Miner Manager monitors a current system time of the PC in real time according to an electricity price curve set by the user, and when the system time is equal to the time set by the user, broadcasts and sends the electricity price to all miners in the local area network through the local area network according to the electricity price set by the user;

S4: the miner computes and decides whether to modify the current operation parameters according to the newest coin price information; the miner computes and decides whether to modify the current operation parameters according to the newest electricity price; the current operation parameters to be modified comprise chip voltage, target power ratio and chip target control temperature; a condition for judging the necessity for the modification is using new input parameters when a calculated chip voltage change amplitude for final operation is 2 mv or a calculated chip target control temperature change amplitude for final operation is greater than 2°C, otherwise this parameter update is neglected;

wherein the miner automatically computes and adjusts the operation parameters to an optimal power ratio according to the above information, and the optimal power ratio enables the miner to operate at a maximum hashrate under conditions of current coin price, electricity price, all-network hashrate and block reward, to obtain a maximum yield.

**7.** The high-yield Bitcoin miner mining method according to claim 6, wherein the information about the coin price and the all-network hashrate originate from the third party server, i.e., the third party service provider; when the third party server shuts down due to force majeure, it needs to be replaced with other third party service provider; the replacement of the third party service provider only requires the modification of the API of the proxy server, and the miner software needn't be modified and can be adapted for multiple service providers; use of the proxy server in cooperation with the management of the Miner Manager in the local area network makes the network interface of the miner not exposed to an external network, and meanwhile the communication between the Miner Manager and the proxy server achieves bi-directional authentication encryption and more safety; by accessing the proxy server through the Miner Manager, the coin price information is broadcast in the local area network to reduce network access traffic.

**8.** The high-yield Bitcoin miner mining method according to claim 7, wherein Step S4 further comprises:

setting a query table, wherein the data in the table originates from chip sort tests and miner production tests; the power ratio and hashrate of the chips are already known at a given temperature and a given voltage; conversely, the chip voltage and chip hashrate can be obtained according to the power ratio and the chip temperature; it is assumed that the chip voltage, the temperature, the power ratio and the hashrate are as shown in the following query table:

| Chip temperature (°C) | Chip voltage (mv) | Power ratio (W/T) | Chip hashrate (THS) |
|---|---|---|---|
| 20 | 380 | 47 | 0.189 |
| 20 | 390 | 50 | 0.210 |
| 20 | 400 | 53 | 0.226 |
| ... | | | |
| 80 | 380 | 53 | 0.259 |
| 80 | 390 | 56 | 0.276 |
| ... | ... | ... | ... |

the mining yield depends on the miner's power ratio, the coin price, the electricity price, the all-network hashrate and the block reward; the coin price and the all-network hashrate fluctuate all the time, and the electricity price also fluctuates according to local situations, and the power ratio of the miner needs to be dynamically adjusted in real time according to the coin price, the electricity price, the all-network hashrate and the block reward to achieve maximization of a dynamic yield;

corresponding profits may be calculated by traversing all chip voltages and power ratios by looking up the table at a given chip temperature; a maximum value, i.e., a maximum yield is found from these profits;

when the coin price, the electricity price, the block reward, the all-network hashrate and the chip temperature change, the above traversing and search process is repeated to allow the miner to always operate at a maximum-yield operating point.

**9.** The high-yield Bitcoin miner mining method according to claim 8, wherein a flow of achieving the maximization of the yield comprises:

let the chip hashrate be chip _hashrate, chip voltage be chip _volt, the power ratio be miner_power_ratio, the number of chips of the miner be chip_count, and the miner hashrate be miner_hashrate,

let the all-network hashrate be network _hashrate, the coil price be btc_price, the block reward be block_reward, a block time interval be block_interval, a total number of blocks produced in 24 hours in all the network be block_count, a total number of block rewards in 24 hours in all the network be total_block_reward, and a revenue per T hashrate in 24 hours be ths_revenue,

let the power of the miner be miner_power, the electricity price be electric_price, and an electricity cost in 24 hours be electric_cost,

let a revenue in 24 hours be revenue, and a profit in 24 hours be profit,
then,
the miner hashrate:

$$miner\_hashrate = chip\_hashrate * chip\_count;$$

the block time interval: block_interval = 600 seconds, which is a theoretical number designed according to a Bitcoin white paper;
the total number of blocks produced in 24 hours in all the network: block_count = 24 * 3600 / 600, i.e., block_count = 144;
the total number of block rewards in 24 hours in all the network: total_block_reward = block_reward * block_count, i.e., total_block_reward = block_reward * 144;
the revenue per T hashrate in 24 hours: ths_revenue = total block_reward * btc_price / network _hashrate;
so far, the revenue per T hashrate in 24 hours is obtained, and the current temperature of the chip is obtained by a temperature sensor in the chip;
all possible profits are calculated by traversing all voltages, power ratios and chip hashrates in the above query table at a given temperature:

the power of the miner:

$$miner\_power = miner\_hashrate * miner\_\ power\_ratio$$

the electricity cost in 24 hours:

$$electric\_cost = electric\_price * 24 * miner\_power / 1000$$

the revenue in 24 hours:

$$revenue = ths\_revenue * miner\_hashrate$$

the profit in 24 hours:

$$profit = revenue - electric\_cost.$$

**10.** The high-yield Bitcoin miner mining method according to claim 9, wherein in said step S4,

there is a curve of power ratios corresponding to different voltages in a case where the miner chip is at a given temperature; as the voltage rises, the power ratios are in a rising tendency;
there is a curve of power ratios corresponding to different temperatures in a case where the miner chip is at a given voltage; as the temperature rises, the power ratios are in a rising tendency;
there are different power ratios in the case where the miner chip is at different voltages and different temperatures;
adjusting the operating parameters of the chip by taking a single hash board as a whole, including adjusting the chip voltage by adjusting a power supply output voltage and adjusting a chip frequency by issuing a frequency scaling command to the chip, calculating by traversing or according to chip mass production test data to obtain an estimated power ratio change range, i.e., a power ratio adjustable range to provide data reference for subsequent selection of a power ratio enabling the optimal yield;
the miner hashrate is enhanced while the miner power ratio is reduced; however, as the hashrate increases, the power ratio also increases correspondingly, so there exists an optimal power ratio enabling a maximum profit:

given the coin price, electricity price and block reward, as the power ratio rises, the profit rises first and then falls, cases vary with different chips and different machine situations, and the power ratio enabling the maximum profit is selected; when the coin price or electricity price fluctuates, the optimal power ratio should be re-calculated;
assuming that the coin price is at a low level in the market and a proportion of the electricity cost rises, it is necessary to reduce the proportion of the electricity cost by reducing the miner power ratio to achieve the maximum yield on the premise of the current coin price and electricity price;
assuming that the coin price is at a high level in the market and the proportion of the electricity cost reduces, it is necessary to increase the miner hashrate to achieve maximum yield at the current coin price and electricity price;

a feasible power ratio range is found by predicting or by traversing regularly, and an estimated power ratio range is obtained by grouping the chips in advance and applying them to different hash boards according to the mass production test data of the chips; as the power ratio test data accumulates, the estimated power ratio range under a certain process can be summarized for use in actual products.

**DRAWINGS**

FIG. 1

FIG. 2

FIG. 3

FIG. 4

FIG. 5

FIG. 6

## Power ratio VS Temperature

FIG. 7

## Power ratio VS Profit

FIG. 8

FIG. 9

## INTERNATIONAL SEARCH REPORT

| International application No. |
| --- |
| **PCT/CN2023/109166** |

| A. | CLASSIFICATION OF SUBJECT MATTER |
| --- | --- |

G06Q20/06(2012.01)i

According to International Patent Classification (IPC) or to both national classification and IPC

| B. | FIELDS SEARCHED |
| --- | --- |

Minimum documentation searched (classification system followed by classification symbols)

IPC:G06Q20/-

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; IEEE: 矿机, 比特币, 以太币, 虚拟货币, 挖矿, 挖掘, 收益, 能效比, 电价, 参数, 修改, 调节, 调整, 代理服务器, 第三方, mining machine, bitcoin, ETH, virtual currency, mining, revenue, energy efficiency ratio, EER, electrovalence, electricity price, parameter, modification, amend, adjust, modulation, proxy server, third party

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2021192619 A1 (BITMAINTECH PTE. LTD.) 24 June 2021 (2021-06-24)<br>description, paragraphs 22-79 | 1-10 |
| A | CN 110825208 A (ZHANXUN SEMICONDUCTOR (CHENGDU) CO., LTD.) 21 February 2020 (2020-02-21)<br>description, paragraphs 77-139 | 1-10 |
| A | CN 108733540 A (HANGZHOU JIA'NAN YUNZHI INFORMATION TECHNOLOGY CO., LTD.) 02 November 2018 (2018-11-02)<br>entire document | 1-10 |
| A | CN 109240808 A (SHENSUAN TECHNOLOGY (CHONGQING) CO., LTD.) 18 January 2019 (2019-01-18)<br>entire document | 1-10 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 March 2024** | **30 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/109166**

## C.     DOCUMENTS CONSIDERED TO BE RELEVANT

| Category* | Citation of document, with indication, where appropriate, of the relevant passages | Relevant to claim No. |
|---|---|---|
| A | CN 112967148 A (YANGTZE DELTA RESEARCH INSTITUTE, UNIVERSITY OF ELECTRONIC SCIENCE AND TECHNOLOGY OF CHINA (QUZHOU)) 15 June 2021 (2021-06-15)<br>entire document | 1-10 |
| A | CN 116418540 A (HUAWEI TECHNOLOGIES CO., LTD.) 11 July 2023 (2023-07-11)<br>entire document | 1-10 |

Form PCT/ISA/210 (second sheet) (July 2022)

**INTERNATIONAL SEARCH REPORT**
Information on patent family members

International application No.

**PCT/CN2023/109166**

| Patent document cited in search report | | | Publication date (day/month/year) | Patent family member(s) | | | Publication date (day/month/year) |
|---|---|---|---|---|---|---|---|
| US | 2021192619 | A1 | 24 June 2021 | US | 11587164 | B2 | 21 February 2023 |
| | | | | US | 2021192499 | A1 | 24 June 2021 |
| CN | 110825208 | A | 21 February 2020 | CN | 110825208 | B | 01 June 2021 |
| CN | 108733540 | A | 02 November 2018 | CN | 108733540 | B | 29 October 2021 |
| CN | 109240808 | A | 18 January 2019 | | None | | |
| CN | 112967148 | A | 15 June 2021 | CN | 112967148 | B | 20 February 2024 |
| CN | 116418540 | A | 11 July 2023 | | None | | |

Form PCT/ISA/210 (patent family annex) (July 2022)